# EUROPEAN PATENT APPLICATION

(11) **EP 2 385 602 A2**
(43) Date of publication of application: **09.11.2011**
(21) Application number: 11158829.9
(22) Date of filing: 18.03.2011
(51) Int. Cl.: H02J 1/00

(54) **Improvements in or relating to electrical generation**

(30) Priority: 15.04.2010 GB 1006252
(71) Applicant: Rolls-Royce plc, London SW1E 6AT (GB)
(72) Inventor: Catucci, Maurizio, Nottingham, Nottinghamshire NG9 2HY (GB); Trainer, David, Derby, Derbyshire DE24 0AQ (GB)
(74) Representative: Little, Thomas Andrew

(57) **Abstract**

Synchronous generators 12 are driven by shafts 14 to produce 3-phase AC power at 24. The frequency and amplitude of power depends on the speed of the respective shaft 14. The outputs 24 are rectified at 18 and connected in series to provide an output V of varying voltage DC power to a load 22. Applications in aerospace renewable energy supply are described.

## Description

The present invention concerns improvements in or relating to electrical generation. Examples include arrangements for use in harsh or difficult environments, such as within gas turbine engines or for renewable energy systems located at remote locations, or at locations which are difficult to access.

In one aspect, examples of the invention provide an electrical generation arrangement comprising:
a plurality of synchronous generators;
a plurality of drive arrangements, each operable to drive the respective generator;
a plurality of rectifiers associated with respective generators to rectify the output of the respective generator;
the rectifiers being connected in series to provide the output voltage of the arrangement.

In another aspect, examples of the invention provide a gas turbine engine comprising:
a plurality of shafts connecting turbines to drive corresponding compressors or fans;
and an electrical generator arrangement according to the first aspect, each generator being driven by a respective shaft of the engine.

In a further aspect, a renewable energy system comprising:
an electrical generator arrangement according to the first aspect;
and a plurality of renewable energy drives operable to drive respective generators.

Additional features of these aspects are set out in the attached claims, to which reference should now be made.

Examples of the present invention will now be described in more detail, by way of example only, and with reference to the accompanying drawings, in which:
Fig. 1 is a simple schematic diagram of one example of a generation arrangement of the present invention;
Fig. 2 is a circuit diagram of a rectifier circuit for the arrangement of Fig. 1;
Fig. 3 corresponds with Fig. 1, modified to include voltage conditioning;
Fig. 4 is a circuit diagram of a voltage conditioning circuit for the arrangement of Fig. 3;
Figs. 5, 6 and 7 correspond with Figs. 1 and 3, showing other examples;
Fig. 8 is a section through a gas turbine engine illustrating schematically an application of the arrangements of Figs. 1 to 7; and
Fig. 9 schematically illustrates the application of the arrangements of Figs. 1 to 7 in relation to renewable energy sources.

### Overview and Example 1

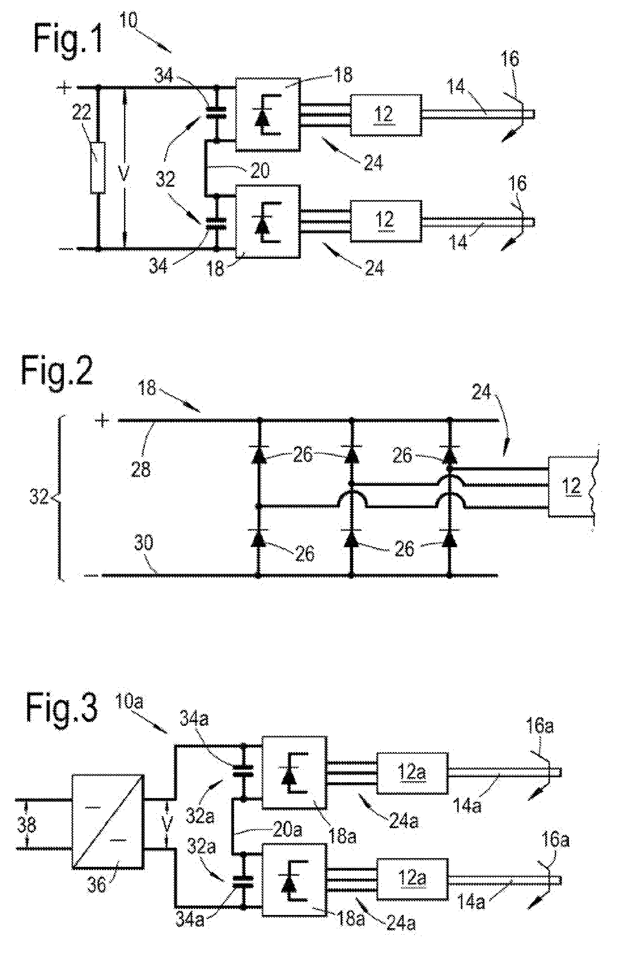

Fig. 1 illustrates an electrical generation arrangement 10. This example includes two synchronous generators 12 which generate 3-phase AC power, in use. In other examples, more than two generators could be provided.

There is a plurality of drive arrangements 14, illustrated in this example as a plurality of shafts. Arrows 16 indicate that the shafts 14 rotate. The shafts 14 provide drive to respective generators 12, as they rotate. The shafts 14 may in turn be driven in various ways, as will be described below.

There is a plurality of rectifiers 18, each associated with a respective one of the generators 12. The rectifiers 18 serve to rectify the AC output of the synchronous generators 12, to provide a DC output from the rectifier 18.

The rectifiers 18 are connected in series at 20 to provide the output voltage V of the arrangement 10, which is a DC voltage and is shown across a load 22.

The synchronous generators 12 are illustrated very simply in the drawings. In the examples being described, the synchronous generators 12 are 3-phase permanent magnet machines. Other types of synchronous generator could be used, such as conventional synchronous generators with field current to provide excitation. Each generator 12 generates 3-phase AC power at 24, having a frequency and amplitude which depend on the speed of the corresponding shaft 14. After rectification by the rectifier 18, the DC voltage from the rectifier 18 has a magnitude which in turn depends on the speed of the corresponding shaft 14.

A suitable circuit for the rectifiers 18 is illustrated in Fig. 2. Each of the 3 phases of the generator output 24 is connected through respective forward and reverse-biased diodes 26 to the positive side 28 and negative side 30 of the DC output 32 of the rectifier 18. This provides a simple form of rectification of the 3-phase AC input. It is to be noted that the rectifier circuit illustrated in Fig. 2 contains only passive components (diodes). The DC output 32 will be expected to exhibit some voltage ripple arising from the simplicity of the rectification. A smoothing capacitor 34 (Fig. 1) is therefore provided across the DC output 32 of each rectifier 18.

Returning to Fig. 1, it can be seen that the rectifiers 18 are connected in series, as noted above. Consequently, the DC output voltage V will have a variable value. This arises because the DC output 32 of each rectifier 18 is dictated by the output voltage of the corresponding generator 12, which is, in turn, dictated by the speed of the corresponding shaft 14. The DC output voltage V may also be affected by the size of the load 22, and other factors.

The current delivered to the load 22 passes through each of the generation sources (represented by one of the generators 12 and the associated rectifier 18), by virtue of their series connection. Consequently, the power delivered by each of the generators 12 is controlled by the DC voltage produced by that generator 12, and thus by the speed of the corresponding shaft 14.

An expected advantage of the arrangement illustrated in Fig. 1 is that the generators 12 and the rectifiers 18 are wholly or substantially passive in their design, thus being expected to provide advantages of reliability, low maintenance etc. In addition, permanent magnet machines can provide generation with a relatively high energy density, resulting in a relatively small and light arrangement, when compared with other generator technologies. In addition, the simplicity of the rectifier circuit 18 provides further savings in complexity and weight.

### Example 2

Fig. 3 illustrates another example of an electrical generator arrangement. Many elements of this arrangement correspond with elements of the arrangement illustrated in Fig. 1 and are therefore given the same reference numerals, with the suffix "a". Consequently, the electrical generator arrangement of Fig. 3 is indicated as 10a.

The principal difference between the arrangements of Fig. 1 and Fig. 3 is the addition of a conditioning circuit 36 in Fig. 3. The conditioning circuit 36 serves to condition the output voltage V of the arrangement 10a. In this example, the conditioning circuit 36 is a DC to DC converter connected across the output voltage V of the arrangement 10a. Consequently, the conditioning circuit 36 receives the full output voltage V as its input and conditions this to provide a controlled DC output at 38.

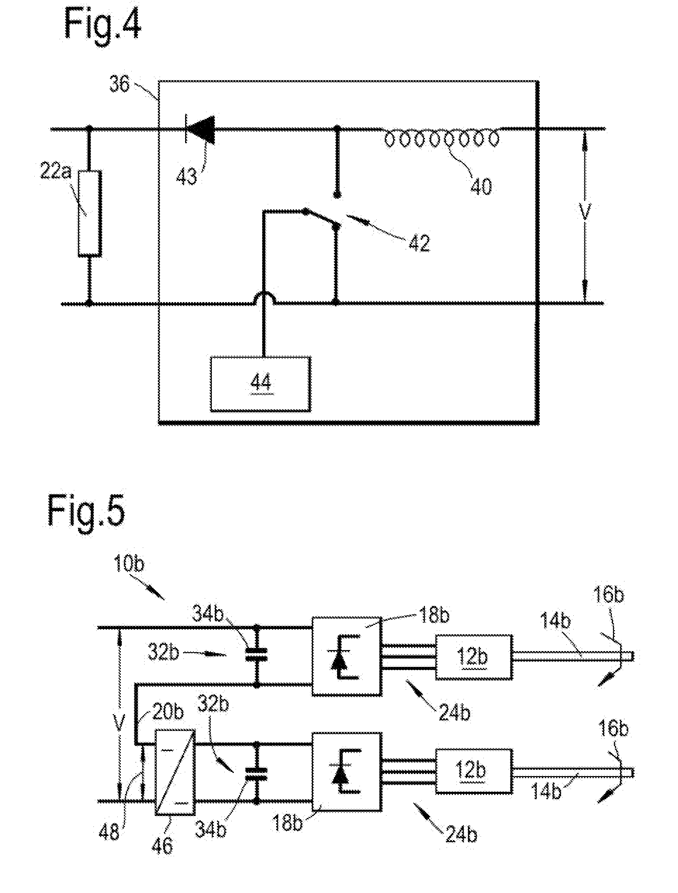

Fig. 4 illustrates a simple circuit for use as the conditioning circuit 36. This includes a choke or inductance 40 in series with the voltage V. A switch 42, which may be a semiconductor switch, is connected to short the inductance 40 under the control of a monitor circuit 44. Thus, when the switch 42 is open, current flows through the inductance 40 to the load 22a but if the voltage applied to the load rises, the switch 42 can be closed to pull back the voltage applied to the load. The conditioning circuit 36 is relatively simple, using only one active component, and is thus expected to provide conditioning with good reliability and relatively low weight.

The inductance 40 prevents excessive current in the switch 42, when closed. A blocking diode 43 prevents current returning from the load.

Other forms of voltage conditioning could be used, the particular choice depending on the requirements placed on the voltage being supplied, particularly by the characteristics of the load.

It will be apparent from Fig. 3 that in this example, the conditioning circuit 36 handles the full power flowing from the generator arrangement 10a.

### Example 3

Fig. 5 illustrates a further example of an electrical generator arrangement. Again, many elements of this arrangement correspond with elements of the arrangement illustrated in Fig. 1 and are therefore given the same reference numerals, with the suffix "b". Consequently, the electrical generator arrangement of Fig. 5 is indicated as 10b.

The principal difference between the arrangements of Fig. 1 and Fig. 5 is the addition of a conditioning circuit 46 in Fig. 5. The conditioning circuit 46 serves to condition the output voltage V of the arrangement 10b, in the following manner. In this example, the conditioning circuit 46 is a DC to DC converter connected across the DC output 32 of one of the rectifiers 18 of the arrangement 10b. Consequently, the conditioning circuit 46 receives the output voltage 38b of the corresponding rectifier 18b as its input and conditions this to provide a controlled DC output at 48.

In this example, one of the generators 12b (the upper generator, as illustrated in Fig. 5) is allowed to produce a varying output voltage, varying according to the speed of the corresponding shaft 14b, as discussed above. However, the other generator 12b (the lower generator, as illustrated in Fig. 5) produces a voltage which is controlled by the conditioning circuit 46. Since the two rectifiers 18b are connected in series, the effect of the conditioning circuit 46 is to condition the final output voltage V of the arrangement 10b. That is, the conditioning circuit 46 can condition the output of one rectifier 18b in accordance with variations in the output of either rectifier 18b. However, the conditioning circuit 46 is only required to process part of the total power output by the arrangement 10b, i.e. that part of the total power which is provided by the lower generator, as illustrated in Fig. 5.

The conditioning circuit 46 may be implemented by the circuit illustrated in Fig. 4. Alternatively, it may be possible to use the inductance of windings in the generator 12b to provide some or all of the inductance required within the circuit of Fig. 4, thus further simplifying the circuit and reducing the component count and weight, and improving reliability.

### Example 4

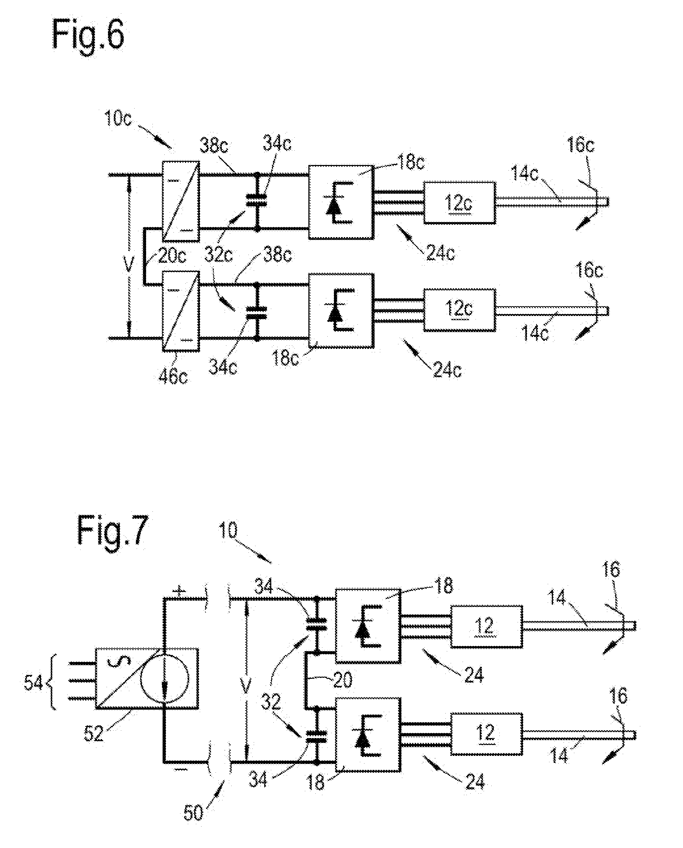

Fig. 6 illustrates a further example of an electrical generator arrangement. Again, many elements of this arrangement correspond with elements of the arrangement illustrated in Fig. 1 and are therefore given the same reference numerals, with the suffix "c". Consequently, the electrical generator arrangement of Fig. 6 is indicated as 10c.

The principal difference between the arrangements of Fig. 5 and Fig. 6 is the use of conditioning circuits 46c in Fig. 6 to condition the DC outputs 32c of each of the rectifiers 18c. The conditioning circuits 46c thus serve to condition the output voltage V of the arrangement 10c, in the following manner. In this example, the conditioning circuits 46c are each a DC to DC converter connected across the DC output 32c of one of the rectifiers 18c of the arrangement 10c. Consequently, the conditioning circuits 46c each receive the output voltage 38c of the corresponding rectifier 18c as an input, and condition this to provide a controlled DC output at 48c. These controlled DC outputs are summed by the series connection 20c, to provide the final output voltage V.

In the example of Fig. 6, as compared with the example of Fig. 5, the conditioning circuits 46c are required between them to handle the full power generated by the generators 12c, although each handles only part of that power. An expected advantage of this arrangement is to allow finer control over the final output voltage V.

Each of the conditioning circuits 46c may be implemented by the circuit illustrated in Fig. 4. Alternatively, it may be possible to use the inductance of windings in the generators 12c to provide some or all of the inductance required within the circuit of Fig. 4, thus further simplifying the circuit and reducing the component count and weight, and improving reliability.

### Example applications

Example applications of the various arrangements described above can now be described.

Each of the arrangements described above has provided DC power in either a variable or conditioned form. This power may be applied to a power bus, for example, to be transmitted to a load. The electrical power drawn from each of the generators in the arrangements described above will be affected by the load connected to the power bus, as well as to the speed of the various shaft is driving the generators.

In an application illustrated schematically in Fig. 7, an arrangement 10 of the type described above in relation to Fig. 1 is used to supply DC current to a bus 50. A converter 52 is connected elsewhere to the bus 50. In this example, the converter 52 is a voltage source or current source converter, operable to produce 3-phase AC power at 54, from the DC power provided over the bus 50.

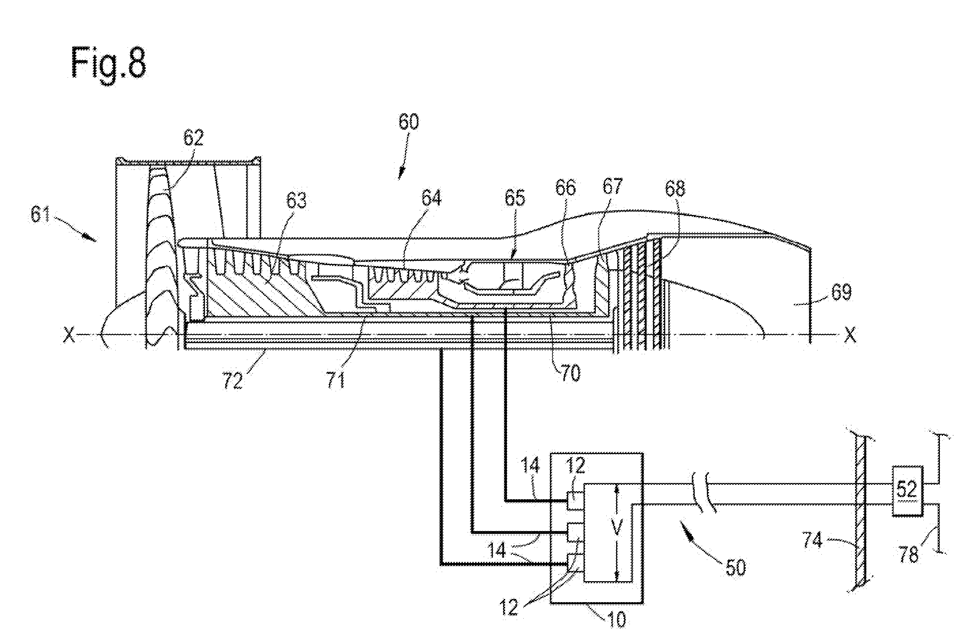

This arrangement can be applied within aerospace applications in conjunction with a gas turbine engine. In order to explain this example application, it is first necessary to describe the gas turbine engine of Figure 8, in more detail.

Referring to Fig. 8, a gas turbine engine is generally indicated at 60 and comprises, in axial flow series, an air intake 61, a propulsive fan 62, an intermediate pressure compressor 63, a high pressure compressor 64, a combustor 65, a turbine arrangement comprising a high pressure turbine 66, an intermediate pressure turbine 67 and a low pressure turbine 68, and an exhaust nozzle 69.

The gas turbine engine 60 operates in a conventional manner so that air entering the intake 61 is accelerated by the fan 62 which produces two air flows: a first air flow into the intermediate pressure compressor 63 and a second air flow which provides propulsive thrust. The intermediate pressure compressor compresses the air flow directed into it before delivering that air to the high pressure compressor 64 where further compression takes place.

The compressed air exhausted from the high pressure compressor 64 is directed into the combustor 65 where it is mixed with fuel and the mixture combusted. The resultant hot combustion products then expand through, and thereby drive, the high, intermediate and low pressure turbines 66, 67 and 68 before being exhausted through the nozzle 69 to provide additional propulsive thrust. The high, intermediate and low pressure turbines 66, 67 and 68 respectively drive the high and intermediate pressure compressors 64 and 63 and the fan 62 by suitable interconnecting shafts 70, 71, 72.

In this example, each of the shafts 70, 71, 72 is used as a drive arrangement in an electrical generation arrangement of the type which has been described above, except that the electrical generation arrangement has been extended to include three synchronous generators, the voltage outputs of which are connected in series. For simplicity, the generation arrangement is illustrated in Fig. 8 with the reference 10 and other reference numerals from Fig. 1, but it is to be understood that any of the arrangements 10, 10a, 10b, 10c could be used.

Thus, in the example of Fig. 8, each of the drive arrangements 14 for the electrical generator arrangement 10 is one of the shafts 70, 71, 72. Each of the synchronous generators 12 in the arrangement 10 is driven by a different shaft of the gas turbine engine 60. The electrical generator arrangement 10 produces an output voltage V from the drive provided by the shafts 70, 71, 72 on the bus 50. In this example, the bus 50 is used as a transmission arrangement to transmit the DC power from the arrangement 10 to the airframe (illustrated schematically at 74) of the aircraft on which the engine 60 is mounted. A converter circuit 52 may be provided within the airframe 74 and may be of the type described in relation to Fig. 7, in order to convert the DC power received from the arrangement 10, to AC power for an AC distribution arrangement 78, within the airframe 74.

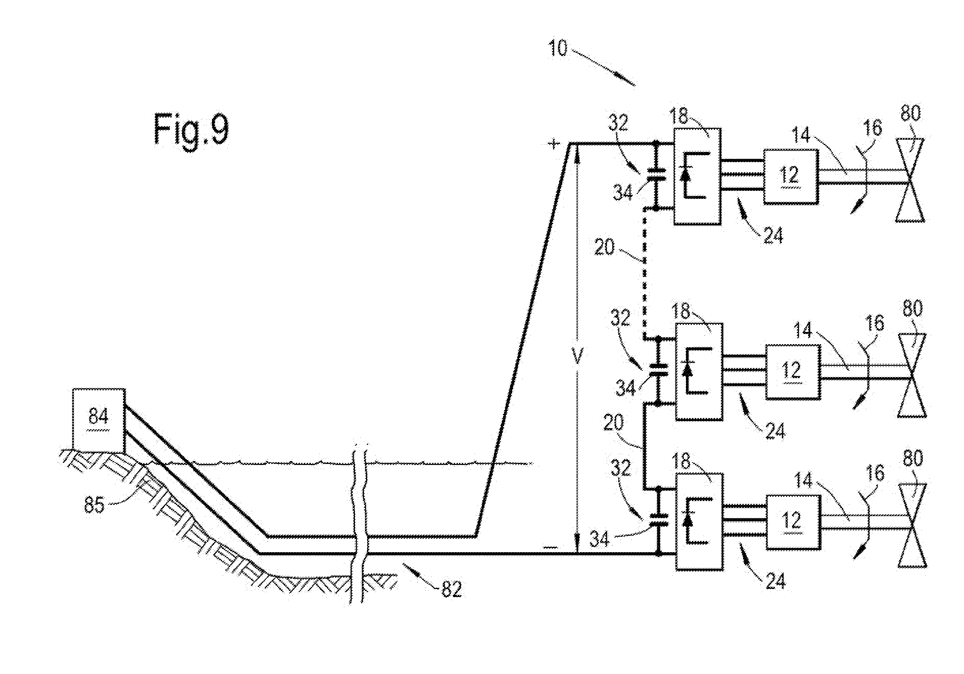

Another example application is illustrated schematically in Fig. 9. In this example, an electrical generation arrangement is illustrated as having the same construction as the arrangement 10 of Fig. 1, except for having a larger number of generators and rectifiers connected in series. Accordingly, the same reference numerals as Fig. 1 used again but it is to be understood that any of the arrangements 10, 10a, 10b, 10c could be used.

In the example of Fig. 9, each of the shafts 14 is driven by a renewable energy source 80, illustrated schematically as a turbine. Each turbine 80 may be a wind turbine, tidal turbine or other form of renewable energy source.

Energy from the renewable energy sources 80 drives the generator arrangement 10 to provide the final DC output voltage V to a bus 82 by means of which the electrical power can be transmitted to a load 84 at a remote location. In Fig. 9, the location of the generator arrangement 10 and the turbines 80 is indicated schematically as being offshore, with the load 84 being on the shore 85.

In this example, the arrangements described above are expected to provide advantages, as follows. The electrical power generated in the arrangement 10 is converted to a DC voltage for transmission over the bus 82, with no conditioning (using the circuit of Fig. 1) or some conditioning, but using circuits which are largely or wholly passive and therefore likely to be reliable, requiring little maintenance. Consequently, those circuits are well suited to being located at locations which are difficult to access, such as offshore wind or wave power installations. Having recovered the generated power to the shore 85, by means of the bus 82, further conditioning can then be applied, using systems of greater complexity but also having greater accessibility, so that any reliability issues arising from the great complexity, neutralised by the greater accessibility. Similarly, issues of space, size and weight are less likely to be significant on shore than at offshore locations.

### Variations and modifications

Many variations and modifications can be made to the apparatus described above, without departing from the scope of the present invention. In particular, many different technologies and circuits can be used to implement each element of the various arrangements described, while continuing to provide the operation described above.

## Claims

1. An electrical generation arrangement (10, 10a, 10b) comprising:
a plurality of synchronous generators (12);
a plurality of drive arrangements (14), each operable to drive a respective generator;
a plurality of rectifiers (18) associated with respective generators to rectify the output of the respective generator;
the rectifiers being connected in series to provide the output voltage of the arrangement.

2. An arrangement (10, 10a, 10b) according to claim 1, wherein the synchronous generators (12) are permanent magnet machines.

3. An arrangement (10, 10a, 10b) according to claim 1 or 2, wherein at least one of the rectifiers (18) is a passive diode circuit.

4. An arrangement (10, 10a, 10b) according to any preceding claim, wherein the arrangement further comprises a conditioning circuit (36, 46, 46c) operable to condition the output voltage of the arrangement.

5. An arrangement (10, 10a, 10b) according to claim 4, wherein the conditioning circuit (36) is connected across the output voltage of the arrangement.

6. An arrangement (10, 10a, 10b) according to claim 4 or 5, wherein the conditioning circuit (46) is connected across one of the rectifiers (18).

7. An arrangement (10, 10a, 10b) according to any of claims 4 to 6, comprising a plurality of conditioning circuits (46c) connected across respective rectifiers (18).

8. An arrangement (10, 10a, 10b) according to any of claims 4 to 7, wherein the or each conditioning circuit (36, 46, 46c) includes a switch (42) selectively operable to short an associated inductance (40).

9. An arrangement (10, 10a, 10b) according to any preceding claim, further comprising a DC transmission arrangement (50) operable to transmit DC power from the rectifiers (18) to a load.

10. An arrangement (10, 10a, 10b) according to claim 9, further comprising a converter circuit (52) connected to the DC transmission arrangement (50) and operable to convert transmitted DC power to AC power (54) for consumption by a load.

11. An arrangement according to claim 8, wherein the conditioning circuit (36, 46, 46c) comprises an inductance (40), a switch (42) and a monitor circuit (44), the inductance (40) is arranged in series with the output voltage (V), the switch (42) is arranged to selectively short the inductance (40) and the control circuit (44) is arranged to monitor the output voltage (V) and to control the switch (42).

12. An arrangement according to claim 11, wherein the conditioning circuit comprises a diode (43).

13. An arrangement according to claim 8, wherein the inductance (40) is provided by the inductance of windings in the generator (12).

14. An arrangement (10, 10a, 10b) according to any preceding claim, wherein at least one of the drive arrangements (14) comprises a rotating shaft (70, 71, 72) of a gas turbine engine (60).

15. An arrangement (10, 10a, 10b) according to claim 14, wherein the gas turbine engine (60) comprising:
a plurality of shafts (70, 71, 72) connecting turbines (66, 67, 68) to drive corresponding compressors or fans (62, 63, 64);
and each generator (12) being driven by a respective shaft (70, 71, 72) of the engine (60).

16. An arrangement (10, 10a, 10b) according to any of claims 1 to 13, wherein at least one of the drive arrangements (14) is driven by a renewable energy source (80).

17. An arrangement (10, 10a, 10b) according to claim 13, wherein the or each renewable energy source (80) is a wind turbine or a tidal turbine.
